# EUROPÄISCHE PATENTSCHRIFT

(11) **EP 4 441 394 B1**
(45) Veröffentlichungstag und Bekanntmachung des Hinweises auf die Patenterteilung: **14.01.2026**
(21) Anmeldenummer: 22813548.9
(22) Anmeldetag: 07.11.2022
(51) Int. Cl.: F16H 57/04

(54) **ÖLFÜHRUNGSKANALTEIL FÜR DEN EINBAU IN EIN GETRIEBE**
OIL DUCT PART TO BE MOUNTED IN A TRANSMISSION
PIÈCE DE CONDUIT D'HUILE À MONTER DANS UNE TRANSMISSION

(30) Priorität: 30.11.2021 DE 102021213489
(43) Veröffentlichungstag der Anmeldung: 09.10.2024
(73) Patentinhaber: Robert Bosch GmbH, 70442 Stuttgart (DE)
(72) Erfinder: ARMBRUSTER, Martin, 74336 Brackenheim (DE); HENN, Andreas, 73433 Aalen (DE); SARETZKI, Manfred, 70180 Stuttgart (DE); MEHNERT, Benjamin Lukas, 71701 Schwieberdingen (DE)
(86) Internationale Anmeldenummer: PCT/EP2022/080920
(87) Internationale Veröffentlichungsnummer: WO 2023/099120

(56) Entgegenhaltungen:
- EP-A1- 2 700 849
- DE-B- 1 291 966
- JP-A- 2005 083 491

## Beschreibung

### Stand der Technik

Im Stand der Technik werden Getriebe für Kraftfahrzeuge insbesondere auch in Kombination mit einem elektromotorischen Antrieb eingesetzt. Dabei müssen die Getriebeelemente des Getriebes wie bei herkömmlichen Getrieben auch mit Öl geschmiert werden. Um den Getriebewirkungsgrad zu steigern und um Kosten zu senken, kann auf eine in herkömmlichen Getrieben oft eingesetzte Ölpumpe zur Getriebeschmierung verzichtet werden. Die Schmierung und Kühlung der Getriebeelemente erfolgt vorzugsweise durch eine passive Ölverteilung. Die Schmierung der rotierenden Getriebeelemente ist wichtig für die Zuverlässigkeit des Getriebes. Eine nicht ausreichende Schmierung kann eine Mangelversorgung der Lager der Getriebeelemente und der Dichtringe mit Öl bewirken. Dies kann zu einem erhöhten Verschleiß bis hin zum Ausfall der Getriebeelemente führen.

Aus der DE 10 2017 108 748 B3 ist ein Ölführungskanalteil für den Einbau in einem Kraftfahrzeuggetriebe bekannt. Das dargestellte Getriebe weist ein Getriebegehäuse und wenigstens ein in dem Getriebegehäuse angeordnetes Getriebezahnrad auf, das wenigstens teilweise in einem Ölsumpf des Getriebes angeordnet ist. Das rotierende Getriebezahnrad wälzt sich mit einem Abschnitt durch den Ölsumpf und nimmt dabei Öl auf. Ein Vorgang der in der Fachsprache oft als Planschen beschrieben wird. Um von dem Getriebezahnrad aufgenommenes Öl gezielter im Getriebe zu verteilen, wird ein brillenartiges Ölführungskanalteil verwandt, welches als Einlegeteil in das Getriebe eingesetzt werden kann. Das Ölführungskanalteil weist mehrere Blenden und einen Leitkanal mit einer Aufnahmeöffnung und einer Auslassöffnung auf, wobei der Leitkanal von der Aufnahmeöffnung bis zur Auslassöffnung eine Ölleitrichtung und eine senkrecht zur Ölleitrichtung umlaufend geschlossene Kanalwand aufweist. In der DE 10 2017 108 748 B3 wird die Kanalwand durch einen um eine Zahnradachse eines Getriebezahnrades des Getriebes gekrümmten Halbbogen-Hohlkörper gebildet, der sich in einem vorbestimmten Einbauzustand des Ölführungskanalteils überwiegend oberhalb eines Ölsumpfpegels des Getriebes befindet. Der gebogene Leitkanal weist eine als Fangmaul ausgebildete Aufnahmeöffnung zur Aufnahme von Öl auf, das von einem anderen Getriebezahnrad, welches mit dem von dem Halbbogen-Hohlkörper umgegebenen Getriebezahnrad kämmt, aufgeworfen und von dem zweiten Getriebezahnrad zu dem Fangmaul weiter transportiert wird. Ein von dem Fangmaul abgewandter und bis auf eine Drosselbohrung geschlossen ausgebildeter Endabschnitt des Halbbogen-Hohlkörpers bildet in der DE 10 2017 108 748 B3 einen Ölsammelbereich zur Ansammlung von durch den Leitkanal geförderten Öl. Die Drosselbohrung bildet die einzige Auslassöffnung des Leitkanals und stellt daher gleichzeitig einen Ablauf für das Öl aus dem wenigstens einen Ölsammelbereich dar. Die Drosselbohrung befindet sich vertikal über dem Zahneingriffsbereich der beiden Getriebezahnräder, so dass der abfließende Ölstrom in deren Zahneingriffsbereich abfließt und die Kontaktflächen der Zähne benetzt.

Aus der EP 2 700 849 A1 ist ein gattungsbildendes Ölführungskanalteil bekannt.

### Offenbarung der Erfindung

Die Erfindung betrifft ein Ölführungskanalteil für den Einbau in ein Getriebe, insbesondere in ein Kraftfahrzeuggetriebe, wobei das Ölführungskanalteil einen Leitkanal mit einer Aufnahmeöffnung und mit einer Auslassöffnung aufweist, wobei der Leitkanal von der Aufnahmeöffnung bis zur Auslassöffnung eine Ölleitrichtung und eine senkrecht zur Ölleitrichtung umlaufend geschlossene Kanalwand aufweist, wobei das Ölführungskanalteil weiterhin wenigstens einen Ölsammelbereich zur Ansammlung von durch den Leitkanal geleitetem Öl aufweist, wobei das Ölführungskanalteil wenigstens einen Ablauf für Öl aus dem wenigstens einen Ölsammelbereich aufweist. Der wenigstens eine Ölammelbereich umfasst ein erstes Sammelbecken, wobei das erste Sammelbecken eine erste Beckenwand und einen ersten Beckenboden aufweist, wobei der Leitkanal derart an die Beckenwand des ersten Sammelbeckens angrenzt, dass der erste Beckenboden in der Ölleitrichtung des Leitkanals gesehen zwischen der Aufnahmeöffnung und der Auslassöffnung angeordnet ist. Erfindungsgemäß ist der Leitkanal von der Aufnahmeöffnung bis zur Auslassöffnung geradlinig ausgebildet.

Im Kontext der vorliegenden Anmeldung ist unter einem "Öl" ein getriebetaugliches flüssiges Schmiermittel zu verstehen, unabhängig davon ob dieses im Handel als Öl vermarktet wird. Insbesondere kann es sich um ein als ATF (Automatic Transmission Fluid) bezeichnetes Schmiermittel oder ähnliche Substanzen handeln.

Unter einem vorbestimmten Einbauzustand, der eine Ausrichtung des Ölführungskanalteils in dem Getriebe relativ zur Schwerkraft definiert, wird ein Einbauzustand verstanden, welcher eine bestimmte Ausrichtung des Ölführungskanalteils relativ zu dem Getriebegehäuse bei bekannter Ausrichtung des zugehörigen Getriebes relativ zum Erdschwerfeld darstellt. Die Ausrichtung des Getriebes relativ zum Erdschwerfeld ist für eine Normallage des Getriebes in der Regel bekannt, wobei die Normallage diejenige Lage ist, in welcher das Getriebe im bestimmungsgemäßen Anwendungsfall relativ zur Schwerkraft ausgerichtet ist. Ist das Getriebe ein Kraftfahrzeuggetriebe, so nimmt das Getriebe eine bestimmte Ausrichtung zur Schwerkraft der Erde ein, wenn das Kraftfahrzeug in der Normallage relativ zum Erdschwerfeld waagerecht ausgerichtet ist. Dies gilt ganz unabhängig davon, ob das Kraftfahrzeug tatsächlich waagerecht zum Erdschwerfeld bewegt wird oder eine Steigung mit einem Neigungswinkel befährt. Aus einer vorbekannten Einbaulage des Getriebes im Kraftfahrzeug kann daher grundsätzlich abgeleitet werden, wie ein Ölführungskanalteil im Getriebe zu verbauen ist, damit das Ölführungskanalteil in der Normallage relativ zur Schwerkraft eine bestimmte Ausrichtung einnimmt. Da bei den meisten möglichen Fahrzuständen des Kraftfahrzeuges der Neigungswinkel bei Talfahrten oder Bergfahren nur sehr moderat um +/- 20° von der Waagerechten abweicht, wird bei der geometrischen Auslegung des Ölführungskanalteils, der Einbauzustand auf eine waagerechte Fahrzeuglage angepasst.

Unter einem Ölführungskanalteil wird ein Bauteil verstanden, welches wenigstens einen Leitkanal für den Öltransport aufweist. Das Ölführungskanalteil kann dazu ausgebildet sein, dem Ölführungskanalteil zugeführtes Öl unter dem Einfluss der Schwerkraft in dem Ölführungskanalteil zu verteilen. Das Ölführungskanalteil kann insbesondere als Einlegeteil ausgebildet sein, welches beim Zusammenbau des Getriebes in dieses eingesetzt wird. Das Ölführungskanalteil kann aus Kunststoff oder Metall oder einem Kunststoff-Metall-Verbund gefertigt werden. Das Ölführungskanalteil kann einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

Im Kontext der vorliegenden Anmeldung wird relativ zu einem angenommenen Bezugspunkt durch die Begriffe "unten" oder "unterhalb" eine Position an einem in Richtung der Schwerkraft gesehen tiefer gelegenen Punkt und durch die Begriffe "oben" oder "oberhalb" eine Position an einem in Richtung der Schwerkraft gesehen höher gelegenen Punkt bezeichnet, wobei eine Ausrichtung des Ölführungskanalteils angenommen wird, die dem vorbestimmten Einbauzustand entspricht.

Unter einem Ölsumpf des Getriebes wird ein Bereich innerhalb des Getriebegehäuses verstanden, in dem sich Öl unter dem Einfluss der Schwerkraft ansammelt. Unter einem Getriebezahnrad, das wenigstens teilweise in einem Ölsumpf des Getriebes angeordnet ist, wird ein Getriebezahnrad verstanden, dass mit einem in Richtung der Schwerkraft unteren Teil in den Ölsumpf eintaucht, während ein oberer Teil des Getriebezahnrades aus dem Ölsumpf herausragt. Bei einer Rotation des Getriebezahnrades nimmt dieses Öl aus dem Ölsumpf auf und transportiert es bis zu einem Ablösepunkt oder Abschlagpunkt entgegen der Schwerkraft. Dieser Vorgang wird als "Planschen" bezeichnet. Die Umwälzung und Förderleistung des Öls durch das Getriebezahnrad hängt dabei direkt von der Drehzahl und über die Viskosität auch von der Temperatur ab. Die einem Getriebezahnrad aus dem Ölsumpf abtransportierte Ölmenge lässt den Pegel des Ölsumpfs im Betrieb absinken. Das Getriebezahnrad kann daher als ein ölförderndes Getriebezahnrad angesehen werden. Von dem Getriebezahnrad und gegebenenfalls weiteren Getriebezahnrädern bei schneller Rotation im Getriebegehäuse verspritztes Öl kann dabei an Stellen gelangen, von denen aus kein rascher Rücklauf in den Ölsumpf erfolgt. Diese Ölmengen nennt man Planschverluste. Um sicherzustellen, dass dennoch genügend Öl von dem Getriebezahnrad gefördert wird und das Getriebe nicht trocken läuft, muss der Ölsumpf eine entsprechende Menge Öl aufweisen. Andererseits ist eine zu hohe Ölmenge im Ölsumpf nicht wünschenswert, da dies nachteilige Schleppverluste des Getriebes erhöht. Als Kompromiss ist es daher erstrebenswert, die durch das Getriebezahnrad abtransportierte Ölmenge möglichst gezielt den Schmierstellen im Getriebe zuzuführen, um Planschverluste zu vermeiden und den Pegel im Ölsumpf auf ein Niveau absenken zu können, bei dem Schleppverluste des Getriebes möglichst gering werden. Dies wird durch das Ölführungskanalteil erreicht.

### Vorteile der Erfindung

Das erfindungsgemäße Ölführungskanalteil ermöglicht eine gezieltere Ölversorgung von Lagern rotierender Getriebeelemente innerhalb eines Getriebegehäuses. Dies wird durch die Ausbildung eines ersten Sammelbeckens, welches eine erste Beckenwand und einen ersten Beckenboden aufweist, in Kombination mit einem speziell ausgebildeten Leitkanal erreicht, wobei der Leitkanal derart an die Beckenwand des ersten Sammelbeckens angrenzt, dass der erste Beckenboden in der Ölleitrichtung des Leitkanals gesehen zwischen der Aufnahmeöffnung und der Auslassöffnung des Leitkanals angeordnet ist. Das Ölführungskanalteil ist insbesondere vorteilhaft dazu ausgebildet, in einem vorbestimmten Einbauzustand, der eine Ausrichtung des Ölführungskanalteils relativ zur Schwerkraft definiert, in einem Getriebe verbaut zu werden, wobei in einer Ausrichtung, die dem vorbestimmten Einbauzustand entspricht, der erste Beckenboden in etwa senkrecht zur Schwerkraft ausgerichtet ist und die Ölleitrichtung von der Aufnahmeöffnung und bis zur Auslassöffnung entgegen der Schwerkraft verläuft. Das erfindungsgemäße Ölführungskanalteil kann insbesondere derart in ein Getriebe eingebaut werden, dass in dem vorbestimmten Einbauzustand die Aufnahmeöffnung des Leitkanals an der Stirnseite eines Getriebezahnrades des Getriebes und der erste Beckenboden oberhalb des Getriebezahnrades positioniert werden kann. In dem Leitkanal durch die Aufnahmeöffnung aufgenommenes Öl kann bis zur Auslassöffnung entgegen der Schwerkraft transportiert werden, wobei aus der Auslassöffnung austretendes Öl sich in dem ersten Sammelbecken ansammeln kann. Die geradlinige Ausbildung des Leitkanals ermöglicht einen möglichst ungehinderten Transport des dem Leitkanal zugeführten Öls in Richtung Auslassöffnung. Der geradlinige Leitkanal kann in einem Getriebe insbesondere so ausgerichtet werden, dass er in dem vorbestimmten Einbauzustand tangential zu einer Stirnseite eines Getriebezahnrades verläuft. Die Aufnahmeöffnung des Leitkanals kann beispielsweise als Fangmaul ausgebildet sein, wobei der umlaufende Rand der Aufnahmeöffnung entsprechend dem Tangentialwinkel des Leitkanals abgeschrägt ausgebildet werden kann, so dass eine möglichst starke Annäherung der Aufnahmeöffnung an die Stirnseite des Getriebezahnrades erreicht werden kann. Die Kontur des umlaufenden Randes kann dabei an den Krümmungsradius der Stirnseite eines Getriebezahnrades angepasst sein. In einer Ausrichtung des Ölführungskanalteils, welche dem vorbestimmten Einbauzustand entspricht, läuft aus der Auslassöffnung des Leitkanals austretendes Öl in Richtung der Schwerkraft ab und sammelt sich in dem ersten Sammelbecken, welches dadurch befüllt wird.

Im Unterschied zu den aus dem Stand der Technik bekannten Lösungen, bei denen der Ölsammelbereich den Endbereich eines um eine Zahnradachse gekrümmten Halbbogen-Hohlkörpers bildet, umfasst bei der vorliegenden Erfindung der Ölsammelbereich ein erstes Sammelbecken, das oberhalb des Öl fördernden Getriebezahnrades angeordnet werden kann. Der sich in dem ersten Sammelbecken ansammelnde Vorrat an Öl lässt den Ölsumpf am Grund des Getriebegehäuses im Betrieb absinken. Der Leitkanal ist als einfacher, umfangsseitig geschlossener Kanal ausgebildet, der sich von der Aufnahmeöffnung bis zu einer Auslassöffnung vorzugsweise geradlinig erstrecken kann. Der Öffnungsquerschnitt der Aufnahmeöffnung kann dem Öffnungsquerschnitt der Auslassöffnung entsprechen. Der Leitkanal mit der umlaufenden Kanalwand stellt einen in das Ölführungskanalteil integrierten Leitkanal dar.

Im Unterschied zum Stand der Technik ist das Ölführungskanalteil so ausgelegt, dass sich das Öl nicht in dem Leitkanal ansammelt, sondern außerhalb des Leitkanals in dem ersten Sammelbecken. Dadurch ist vorteilhaft, auch bei Drehzahlschwankungen eine ausreichende Schmierung der Getriebelager möglich, da im Betrieb zunächst der im ersten Sammelbecken enthaltene Vorrat zur Versorgung der Schmierstellen genutzt werden kann. Wenigstens ein Ablauf, vorzugsweise jedoch mehrere Abläufe können an dem ersten Sammelbecken vorhanden sein, um die Ölzuführung zu unterschiedlichen Lagern in dem Getriebe zu realisieren. Vorteilhaft kann im Vergleich zum Stand der Technik die Menge des im Betrieb durch den Leitkanal geförderten Öls unabhängiger von der aus dem Ölsammelbereich über einen Ablauf ablaufenden Ölmenge ausgestaltet werden. Der Leitkanal dient lediglich der Befüllung des ersten Sammelbeckens, während der Abfluss von Öl aus dem ersten Sammelbecken über die geometrische Ausgestaltung des Sammelbeckens und die geometrische Ausgestaltung wenigstens eines Ablaufs aus dem Sammelbecken eingestellt werden kann. Die Ölzuführung zu Lagerstellen der Getriebeelemente kann daher vorteilhaft sowohl örtlich wie auch in Hinblick auf den Zeitablauf optimiert werden. Insbesondere bei Getrieben, in denen rotierende Getriebeelemente in Bezug auf die Schwerkraft in mehreren Ebenen übereinander angeordnet sind, gelingt so eine verbesserte Schmierung der Lagerstellen.

Da das erste Sammelbecken vorteilhaft als Zwischenspeicher genutzt werden kann, steht auch bei kurzen Deaktivierungszeiten einer das Getriebe antreibenden elektrischen Maschine eine schnellere Schmierung bei erneuter Aktivierung der elektrischen Maschine bereit. Bei längeren Standzeiten kann sich das erste Sammelbecken über eine kleine Ablauföffnung in dem ersten Beckenboden jedoch auch vollständig in Richtung Ölsumpf entleeren.

Vorteilhafte Ausführungsformen und Weiterbildungen der Erfindung werden durch die in den abhängigen Ansprüchen angegebenen Merkmale ermöglicht. Vorteilhaft kann ein von der Aufnahmeöffnung abgewandtes Ende der Kanalwand des Leitkanals eine über den ersten Beckenboden des ersten Sammelbeckens vorstehende und die Auslassöffnung begrenzende, umlaufende Wandung derart ausbildet, dass aus der Auslassöffnung des Leitkanals austretendes Öl sich in Richtung der Schwerkraft ablaufend in dem ersten Sammelbecken sammelt. Über die umlaufende Wandung ablaufendes Öl kann somit vorteilhaft direkt in das erste Sammelbecken ablaufen und dieses befüllen.

Der Ölsammelbereich des Ölführungskanalteils kann weiterhin beispielsweise ein zweites Sammelbecken umfassen, wobei das zweite Sammelbecken eine zweite Beckenwand und einen zweiten Beckenboden aufweist, wobei das zweite Sammelbecken über einen Verbindungskanal mit dem ersten Sammelbecken in Verbindung steht.

Das erste Sammelbecken und das zweite Sammelbecken können vorteilhaft mit Abläufen versehen werden. Beispielsweise kann ein erster Ablauf in der vorbestimmten Einbaurichtung oberhalb des ersten Beckenbodens von der ersten Beckenwand abragen. Beispielsweise kann ein zweiter Ablauf in der vorbestimmten Einbaurichtung oberhalb des zweiten Beckenbodens von der zweiten Beckenwand des zweiten Sammelbeckens abragen. Weiterhin beispielhaft kann ein dritter Ablauf kann in der vorbestimmten Einbaurichtung oberhalb des ersten Beckenbodens an einer dem ersten Ablauf gegenüberliegenden Seite von der ersten Beckenwand des ersten Sammelbeckens abragen. Der erste Ablauf, der zweite Ablauf und/oder der dritte Ablauf können unterschiedliche Lager in einem Getriebe mit Schmieröl versorgen. Die Ölzufuhr zu den Lagern erfolgt dabei vorteilhaft "passiv", also durch Ablaufen des Öls über die jeweils zugeordneten Abläufe.

Vorteilhaft kann der Rand der umlaufenden Wandung des Leitkanals auf einer dem ersten Sammelbecken zugewandten Seite einen Abstand von dem ersten Beckenboden aufweisen, welcher geringer ausgebildet ist als der Abstand des Randes der umlaufenden Wandung von dem zweiten Beckenboden auf einer dem zweiten Sammelbecken zugewandten Seite. Öl welches dem Ölsammelbereich durch den Leitkanal zugeführt, wird gelangt zunächst in das erste Sammelbecken und füllt dieses zumindest teilweise, bevor das Öl über den Verbindungskanal in das zweite Sammelbecken gelangt. Dadurch wird optional ein zu früher Ablauf des Öls in Richtung eines zweiten Ablaufs an dem ersten Sammelbecken vermieden und sichergestellt, dass zunächst der erste Ablauf an dem ersten Sammelbecken mit Öl versorgt ist. In gewisser Hinsicht erfolgt daher in diesem Ausführungsbeispiel der Ablauf des Öls über den ersten Ablauf und den zweiten Ablauf kaskadenartig, wobei zunächst das erste Sammelbecken befüllt wird, bis Öl über den ersten Ablauf aus dem Ölführungskanalteil abläuft und gleichzeitig, kurz zuvor oder auch kurze Zeit später das zugeführte Öl über den Verbindungskanal das zweite Sammelbecken zu füllen beginnt, so dass Öl in diesem Beispiel über den zweiten Ablauf erst abläuft, nachdem es bereits über den ersten Ablauf abläuft.

Natürlich können auch weitere Sammelbecken an dem Ölführungskanalteil und/oder weitere Abläufe an dem ersten oder zweiten Sammelbecken vorgesehen werden, mit denen weitere Lager rotierender Getriebeelemente mit Öl geschmiert werden.

Das Ölführungskanalteil kann vorteilhaft mehrere von dem Ölführungskanalteil abstehende Haltenocken vorzugsweise an gegenüberliegenden Seiten des Ölführungskanalteils aufweisen, über die das Ölführungskanalteil in einem vorbestimmten Einbauzustand in ein Getriebe einsetzbar ist.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Fig. 1: einen der Erläuterung dienenden Querschnitt durch ein Getriebe eines Kraftfahrzeuges, welches von einer elektrischen Maschine angetrieben wird,
- Fig. 2: eine perspektivische Ansicht eines Ausführungsbeispiels eines erfindungsgemäßen Ölführungskanalteils zum Einsatz in einem Getriebe,
- Fig. 3: eine Draufsicht auf das Ölführungskanalteil aus Fig. 2,
- Fig. 4: eine weitere perspektivische Ansicht des Ölführungskanalteils aus Fig. 2 und Fig. 3,
- Fig. 5: eine vergrößerte Detailansicht aus Fig. 6,
- Fig. 6: einen Querschnitt durch ein Getriebe mit Getriebegehäuse, welches der Darstellung der Fig. 1 entspricht, mit einem darin in einem vorbestimmten Einbauzustand eingesetzten Ölführungskanalteil, wie es in den Figuren 1 bis 4 dargestellt wurde.

### Ausführungsformen der Erfindung

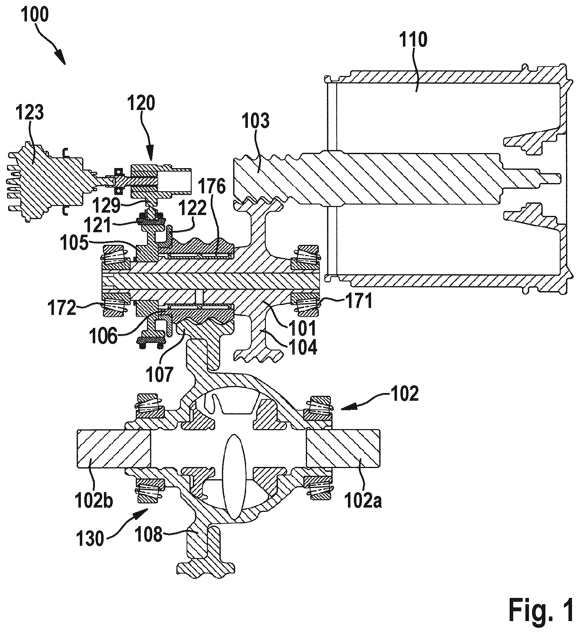

Fig. 1 zeigt eine Antriebsvorrichtung für ein Kraftfahrzeug, die ein Getriebe 100 umfasst. Die Beschreibung des Getriebes dient der Erläuterung der Einsatzmöglichkeiten eines Ölführungskanalteils, wie es weiter unten noch beschrieben wird.

Das Getriebe 100 ist eingangsseitig mit einer elektrischen Maschine 110 verbunden, die eine Rotorwelle 103 aufweist. Die Rotorwelle 103 kämmt mit einem Zahnrad 104, das drehfest mit einer Antriebswelle 101 des Getriebes gekoppelt ist. Die Antriebswelle 101 ist über ihren Außenumfang an zwei axial beabstandeten Lagerstellen 171 und 172 in einem (in Fig. 1 nicht dargestellten) Getriebegehäuse drehbar gelagert.

Weiterhin umfasst das Getriebe 100 eine Kupplungseinrichtung 120, die beispielsweise mittels eine vorzugsweise elektrisch betätigbaren Drehstellers 123 ansteuerbar ist. Der elektrische Aktuator 123 kann beispielsweise über einen Spindelantrieb und eine Schaltgabel 129 auf ein Kupplungselement 121 einwirken, das axial verschiebbar auf einer Führungsnabe 105 gelagert ist. Das Kupplungselement 121 ist beispielsweise ringförmig ausgebildet und kann sich relativ zur Schaltgabel 129 drehen. Das Kupplungselement 121 kann eine Innenverzahnung aufweisen, die in eine Außenverzahnung der Führungsnabe 105 eingreift, so dass das Kupplungselement 121 auf der Führungsnahe 105 parallel zur Achse der Antriebswelle 101 verschiebbar ist. Die Führungsnabe 105 und das damit in Eingriff stehende Kupplungselement 121 ist drehfest auf der Antriebswelle 101 gelagert. Weiterhin ist ein Koppelelement 122 vorgesehen, das drehfest mit einem Ritzel 106 gekoppelt ist. Das Ritzel 106 ist beispielsweise mit einem als Nagellager ausgebildeten Lager 176 auf der Antriebswelle 101 drehbar gelagert. Das Koppelelement 122 kann eine Außenverzahnung aufweisen. Bei einer Betätigung des Drehstellers 123 verschiebt der Spindelantrieb über die Schaltgabel das Kupplungselement 121 in der axialen Richtung, bis die Innenverzahnung des Kupplungselementes 121 in die Außenverzahnung des Koppelelementes 122 eingreift, wodurch das Kupplungselement 121 drehfest mit dem Koppelelement 122 gekoppelt wird. Durch die Kopplung rotiert das Zahnrad 104, die Antriebswelle 101, die Führungsnabe 105, das Kupplungselement 121, das Koppelelement 122 und das Ritzel 106 als Block um die Achse der Antriebswelle 101. Bei einer Entkopplung wird mittels des Drehstellers 123 das Kupplungselement 121 von dem Koppelelement 122 in Fig. 1 nach links abgezogen, wodurch die Kopplung zwischen dem Ritzel 106 und der Antriebswelle 101 aufgehoben wird. Das Ritzel 106 kann nun um die Antriebswelle 101 rotieren.

Das Ritzel 106 kämmt mit einem Getriebezahnrad 107. Das Getriebezahnrad 107 ist drehfest mit einem Differential 130 gekoppelt ist. Das Differential 130 weist eine Abtriebswelle 102 in Form einer ersten Abtriebswelle 102a und einer zweiten Abtriebswelle 102b auf, die mit dem Differential 130 drehend angetrieben werden können. Das Getriebezahnrad 107 ist mit dem Differentialkäfig 108 des Differentials 130 fest verbunden. Wie in Fig. 7 dargestellt ist, kann das Differential 130 in das Getriebegehäuse 140 des Getriebes 100 integriert sein.

Wie bereits beschrieben, wird in dem entkoppelten Zustand mittels der Kupplungseinrichtung 120 die Kopplung zwischen dem Ritzel 106 und der Antriebswelle 101 aufgehoben. Wird nun beispielsweise in einem Fahrzustand eines Kraftfahrzeuges zusätzlich die elektrische Maschine abgeschaltet, so wird die Rotorwelle 103 und die Antriebswelle 101 nicht mehr angetrieben. Die Räder des noch rollenden Kraftfahrzeugs treiben nun über die Ausgangswelle 102 das Getriebezahnrad 107 an, welche mit dem Ritzel 106 kämmt, so dass das Ritzel 106 um die Antriebswelle 101 rotiert. Auch in diesem Zustand muss gewährleistet sein, dass beispielsweise das über dem Ölsumpf des Getriebes 100 angeordnete Lager 176 des Ritzels 106 ausreichend mit Öl versorgt wird.

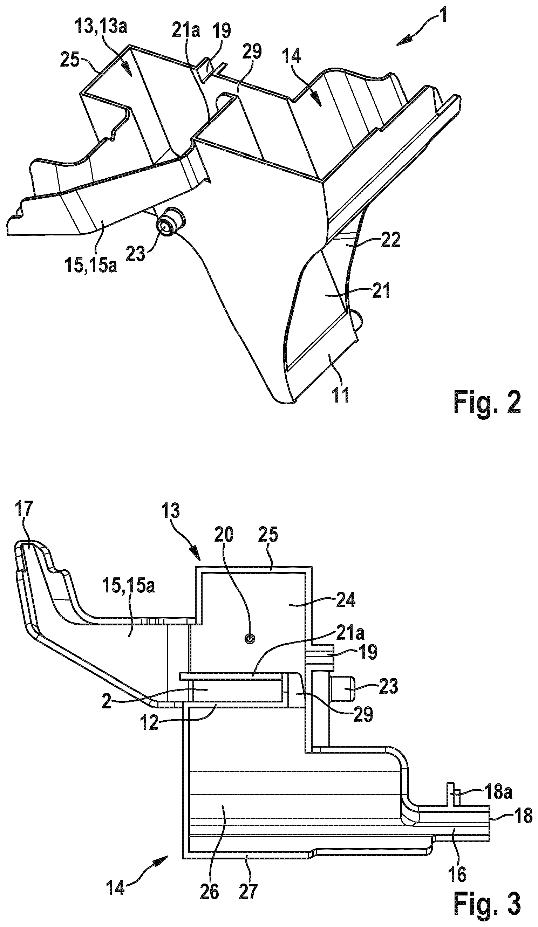

Fig. 2, Fig. 3 und Fig. 4 zeigen ein Ausführungsbeispiel eines erfindungsgemäßen Ölführungskanalteils 1, das beispielsweise dazu bestimmt sein kann in dem anhand der Fig. 1 dargestellten Getriebe 100 verbaut zu werden. Das Ölführungskanalteil 1 kann, wie hier gezeigt, als Einlegeteil ausgebildet sein, welches beim Zusammenbau des Getriebes 100 in das Getriebe 100 eingesetzt wird. Das Ölführungskanalteil 1 kann aus Kunststoff oder Metall oder einem Kunststoff-Metall-Verbund gefertigt werden und einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

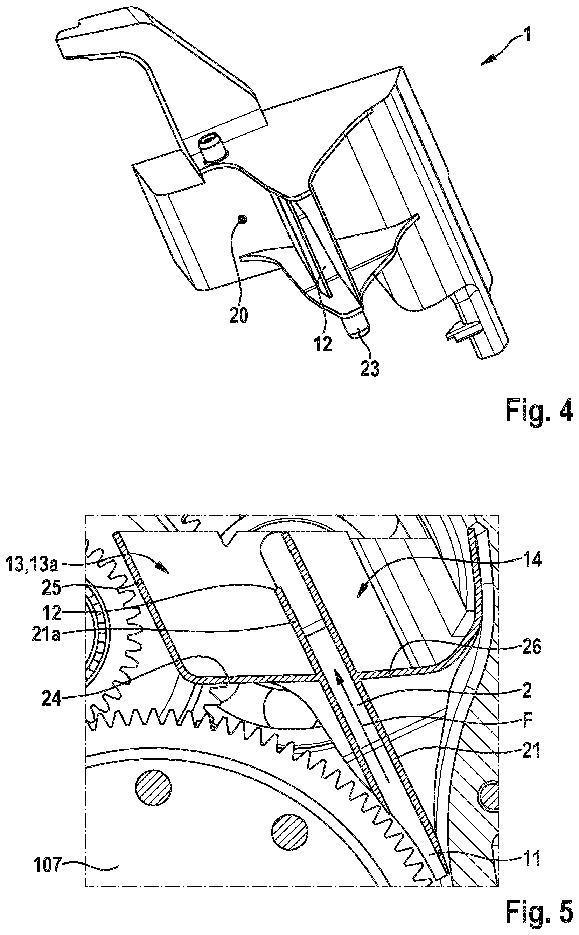

Das Ölführungskanalteil 1 weist einen Leitkanal 2 mit einer Aufnahmeöffnung 11 und mit einer Auslassöffnung 12 auf, wobei der Leitkanal 2 von der Aufnahmeöffnung 11 bis zur Auslassöffnung 12 eine Ölleitrichtung F (dargestellt in Fig. 5) und eine senkrecht zur Ölleitrichtung F umlaufend geschlossene Kanalwand 21 aufweist. Das Ölführungskanalteil 1 weist weiterhin einen Ölsammelbereich 13a zur Ansammlung von durch den Leitkanal 2 gefördertem Öl und einen Ablauf 15a für Öl aus dem Ölsammelbereich 13a auf. Der Ölsammelbereich 13a umfasst ein erstes Sammelbecken 13. Das erste Sammelbecken 13 weist eine erste Beckenwand 25 und einen ersten Beckenboden 24 auf. Ein von der Aufnahmeöffnung 11 des Leitkanals 2 abgewandtes Ende der Kanalwand 21 bildet eine über den ersten Beckenboden 24 des ersten Sammelbeckens 13 vorstehende und die Auslassöffnung 12 begrenzende, umlaufende Wandung 21a, wie in Fig. 2, Fig. 3 und insbesondere in Fig. 5 gut zu erkennen ist. Das Ölführungskanalteil 1 weist weiterhin einen ersten Ablauf 15 auf, der oberhalb des ersten Beckenbodens 24 von der ersten Beckenwand 25 abragt und eine Ablauföffnung 17 aufweist. Der erste Ablauf 15 ist als abgewinkelte Rinne ausgebildet. Zusätzlich kann am oberen Rand der ersten Beckenwand 25 ein weiterer Ablauf 19 angeformt sein, der als Überlauf fungiert. Das erste Sammelbecken 13 kann eine als Bohrung ausgebildete kleine Ablauföffnung 20 im ersten Beckenboden 24 aufweisen, über die sich das erste Sammelbecken 13 bei längeren Standzeiten entleeren kann. Der Durchmesser der Ablauföffnung 20 ist so klein ausgebildet, dass die über die Ablauföffnung 20 ablaufende Ölmenge im Betriebe deutlich kleiner ist, als die für den Leitkanal 2 zugeführte Ölmenge.

Wie weiterhin in Fig. 2, Fig. 3 und Fig. 4 dargestellt ist, umfasst der Ölsammelbereich 13a des Ölführungskanalteils 1 ein zweites Sammelbecken 14, wobei das zweite Sammelbecken 14 eine zweite Beckenwand 27 und einen zweiten Beckenboden 26 aufweist. Wie in Fig. 3 erkennbar ist, steht das zweite Sammelbecken 14 über einen Verbindungskanal 29 (Fig. 3) mit dem ersten Sammelbecken 13 in Verbindung. Ein zweiter Ablauf 16 ragt oberhalb des zweiten Beckenbodens 26 von der zweiten Beckenwand 27 des zweiten Sammelbeckens 14 ab und weist eine Ablauföffnung 18 auf. Auch der zweite Ablauf 16 kann rinnenartig ausgebildet sein. Zusätzlich kann der zweite Ablauf 16 beispielsweise eine weitere Ablauföffnung 18a aufweisen, die von dem Ablauf 16 abgewinkelt ist.

Der Rand der umlaufenden Wandung 21a weist vorzugsweise auf einer dem ersten Sammelbecken 13 zugewandten Seite einen Abstand von dem ersten Beckenboden 24 auf, der geringer ausgebildet ist als der Abstand des Randes der umlaufenden Wandung 21a von dem zweiten Beckenboden 26 auf einer dem zweiten Sammelbecken 14 zugwandten Seite.

Das in den Figuren 2 bis 4 dargestellte Ölführungskanalteil 1 ist dazu ausgelegt, in einem vorbestimmten Einbauzustand, der eine Ausrichtung des Ölführungskanalteils relativ zur Schwerkraft G definiert, in dem Getriebegehäuse 140 eines Getriebes angeordnet zu werden. Ohne darauf beschränkt zu sein, ist das Ölführungskanalteil 1 vorzugsweise dazu bestimmt, in das in der Fig. 1 dargestellte Getriebe 100 eingesetzt zu werden. Dazu weist das Ölführungskanalteil 1 an den Seiten von dem Ölführungskanalteil 1 abstehende Haltenocken 23 auf, mit denen das Ölführungskanalteil 1 in einem Getriebegehäuse 140 des Getriebes 100 in einer vorbestimmten Ausrichtung relativ zur Normallage des Getriebes 100 verbaut und verankert werden kann. Wie in Fig. 2 weiterhin zu erkennen ist, kann das Ölführungskanalteil 1 zur Stabilitätserhöhung mit Verstärkungsrippen 22 versehen sein.

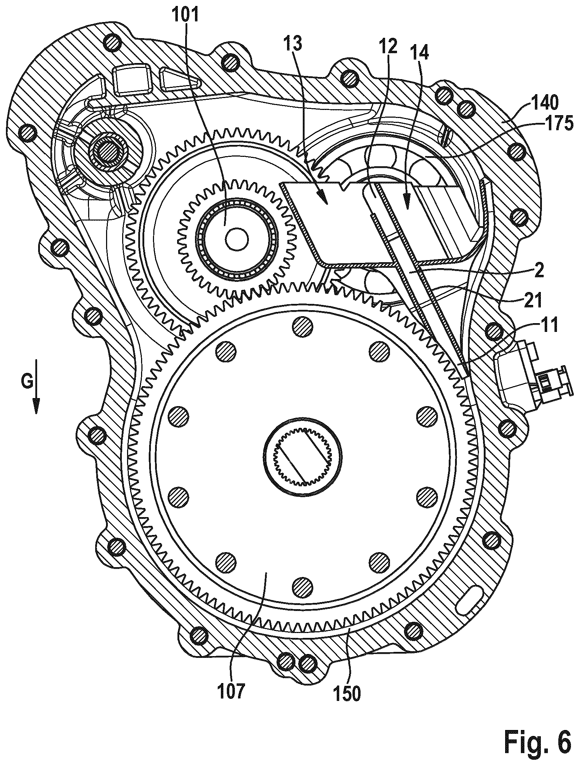

Fig. 6 und die vergrößerte Detailansicht der Fig. 5 zeigen ein Getriebe 100, dessen grundsätzlicher Aufbau dem in der Fig. 1 dargestellten Getriebe entspricht, mit dem darin verbauten Ölführungskanalteil 1 aus Fig. 2 bis 4. Es ist zu erkennen, dass die Aufnahmeöffnung 11 des Leitkanals 2 an der Stirnseite des Getriebezahnrades 107 und in unmittelbarer Nähe zur der Stirnseite des Getriebezahnrades 107 positioniert werden kann, während der erste Beckenboden 24 des ersten Sammelbeckens 13 oberhalb des Getriebezahnrades 107 angeordnet werden kann. Die Ölleitrichtung F verläuft daher von der Aufnahmeöffnung 11 bis zur Auslassöffnung 12 entgegen der Schwerkraft G, deren Ausrichtung für die Normallage des Getriebes 100 in Fig. 6 dargestellt ist.

Wie in den Figuren 5 und 6 dargestellt ist, ist der Leitkanal 2 vorzugsweise geradlinig ausgebildet und verläuft zumindest im Bereich des Getriebezahnrades 107 vorzugsweise tangential zu einer Stirnseite des Getriebezahnrades 107. Die Aufnahmeöffnung 11 kann als Fangmaul ausgebildet sein, wobei der umlaufende Rand der Aufnahmeöffnung 11 entsprechend dem durch die Richtung von Schwerkraft und Förderrichtung F gebildeten Winkel abgeschrägt ausgestaltet sein kann, so dass eine möglichst starke Annäherung der Aufnahmeöffnung 11 an die Stirnseite des Getriebezahnrades 107 erreicht werden kann. Die Kontur des umlaufenden Randes kann dabei wie dargestellt an den Krümmungsradius der Stirnseite des Getriebezahnrades 107 angepasst sein.

Das Getriebezahnrad 107 des Getriebes 100 ist teilweise in einem Ölsumpf 150 angeordnet. Das Getriebezahnrad 107 nimmt Öl aus dem Ölsumpf 150 auf und transportiert dieses in die Aufnahmeöffnung 11 des Leitkanals 2. Der Bewegungsimpuls des Öls drückt dieses in dem Leitkanal 2 in der Ölleitrichtung F bis zur Auslassöffnung 12.

Wie am besten in Fig. 5 zu erkennen ist, läuft in dem vorbestimmten Einbauzustand des Ölführungskanalteils 1 das im Betrieb aus der Auslassöffnung 12 des Leitkanals 2 austretende Öl über die umlaufende Wandung 21a in Richtung der Schwerkraft G und damit in Richtung des ersten Sammelbeckens 13 ab, wo es sich ansammelt. Da der Rand der umlaufenden Wandung 21a auf der dem ersten Sammelbecken 13 zugewandten Seite einen Abstand von dem ersten Beckenboden 24 aufweist, der geringer ausgebildet ist als der Abstand des Randes der umlaufenden Wandung 21a von dem zweiten Beckenboden 26 auf einer dem zweiten Sammelbecken 14 zugwandten Seite, fließt das Öl zunächst über den Rand der umlaufenden Wandung 21a an der dem ersten Sammelbecken 12 zugewandten Seite, so dass dieses zunächst befüllt wird. Sobald das Öl den Verbindungskanal 29 erreicht, füllt sich über diesen auch das zweite Sammelbecken 14 mit Öl. Der in dem ersten Sammelbecken 13 und dem zweiten Sammelbecken 14 ansteigende Ölpegel erreicht nach kurzer Zeit den ersten Ablauf 15 und den zweiten Ablauf 16 und fließt unter dem Einfluss der Schwerkraft G über die erste Ablauföffnung 17 und die zweite Ablauföffnung 18 und dritte Ablauföffnung 18a aus dem Ölführungskanalteil 1 ab.

Das über den ersten Ablauf 15 und den zweiten Ablauf 18 aus dem Ölführungskanalteil 1 ablaufende Öl kann in dem Getriebe 100 an unterschiedliche Lager von Getriebeelementen herangeführt werden, die räumlich voneinander entfernt sein können. Beispielsweise kann der erste Ablauf 15 dazu dienen das Lager 176 des Ritzels 16 in Fig. 1 mit Öl zu versorgen, während der zweite Ablauf 16 das Lager einer Rotorwelle 103 mit Öl versorgt.

Das Ölführungskanalteil 1 kann jedoch auch anders als in Fig. 2 bis 4 dargestellt aufgebaut sein. Es versteht sich, dass mittels des wenigstens eines ersten Sammelbeckens und der davon abzweigenden Abläufe und/oder Verbindungskanäle zu weiteren Sammelbecken eine optimale Zuführung von Schmieröl an die Lager rotierender Getriebeelemente auch für andersartig aufgebaute Getriebe optimal angepasst werden kann.

## Patentansprüche

1. Ölführungskanalteil (1) für den Einbau in ein Getriebe (100), insbesondere für den Einbau in ein Kraftfahrzeuggetriebe, wobei das Ölführungskanalteil (1) einen Leitkanal (2) mit einer Aufnahmeöffnung (11) und mit einer Auslassöffnung (12) aufweist, wobei der Leitkanal (2) von der Aufnahmeöffnung (11) bis zur Auslassöffnung (12) eine Ölleitrichtung (F) und eine senkrecht zur Ölleitrichtung (F) umlaufend geschlossene Kanalwand (21) aufweist, wobei das Ölführungskanalteil (1) weiterhin wenigstens einen Ölsammelbereich (13a) zur Ansammlung von durch den Leitkanal (2) geleitetem Öl aufweist, wobei das Ölführungskanalteil (1) wenigstens einen Ablauf (15a) für Öl aus dem wenigstens einen Ölsammelbereich (13a) aufweist, wobei der wenigstens eine Ölsammelbereich (13a) ein erstes Sammelbecken (13) umfasst, wobei das erste Sammelbecken (13) eine erste Beckenwand (25) und einen ersten Beckenboden (24) aufweist, wobei der Leitkanal (2) derart an die erste Beckenwand (25) des ersten Sammelbeckens (13) angrenzt, dass der erste Beckenboden (24) in der Ölleitrichtung (F) des Leitkanals (2) gesehen zwischen der Aufnahmeöffnung (11) und der Auslassöffnung (12) angeordnet ist, **dadurch gekennzeichnet, dass** der Leitkanal (2) von der Aufnahmeöffnung (11) bis zur Auslassöffnung (12) geradlinig ausgebildet ist.

2. Ölführungskanalteil (1) nach Anspruch 1, **dadurch gekennzeichnet, dass** das Ölführungskanalteil (1) dazu ausgebildet ist, in einem vorbestimmten Einbauzustand, der eine Ausrichtung des Ölführungskanalteils (1) relativ zur Schwerkraft (G) definiert, in einem Getriebe (100) verbaut zu werden, wobei in einer Ausrichtung die dem vorbestimmten Einbauzustand entspricht, der erste Beckenboden (24) in etwa senkrecht zur Schwerkraft (G) ausgerichtet ist und die Ölleitrichtung (F) von der Aufnahmeöffnung (11) und bis zur Auslassöffnung (12) entgegen der Schwerkraft (G) verläuft.

3. Ölführungskanalteil (1) nach Anspruch 1 oder 2, **dadurch gekennzeichnet, dass** ein von der Aufnahmeöffnung (11) abgewandtes Ende der Kanalwand (21) des Leitkanals (2) eine über den ersten Beckenboden (24) des ersten Sammelbeckens (13) vorstehende und die Auslassöffnung (12) begrenzende, umlaufende Wandung (21a) ausbildet.

4. Ölführungskanalteil (1) nach einem der vorstehenden Ansprüche, **dadurch gekennzeichnet, dass** der Ölsammelbereich (13a) des Ölführungskanalteils (1) ein zweites Sammelbecken (14) umfasst, wobei das zweite Sammelbecken (14) eine zweite Beckenwand (27) und einen zweiten Beckenboden (26) aufweist, wobei das zweite Sammelbecken (14) über einen Verbindungskanal (29) mit dem ersten Sammelbecken (13) in Verbindung steht.

5. Ölführungskanalteil (1) nach Anspruch 3 und 4, **dadurch gekennzeichnet, dass** der Rand der umlaufenden Wandung (21a) auf einer dem ersten Sammelbecken (13) zugewandten Seite einen Abstand von dem ersten Beckenboden (24) aufweist, welcher geringer ausgebildet ist als der Abstand des Randes der umlaufenden Wandung (21a) von dem zweiten Beckenboden (26) auf einer dem zweiten Sammelbecken (14) zugewandten Seite.

6. Ölführungskanalteil nach einem der vorstehenden Ansprüche, **dadurch gekennzeichnet, dass** ein erster Ablauf (15) in der vorbestimmten Einbaurichtung oberhalb des ersten Beckenbodens (24) von der ersten Beckenwand (25) abragt.

7. Ölführungskanalteil nach Anspruch 4, **dadurch gekennzeichnet, dass** ein zweiter Ablauf (16) in der vorbestimmten Einbaurichtung oberhalb des zweiten Beckenbodens (26) von der zweiten Beckenwand (27) des zweiten Sammelbeckens (14) abragt.

8. Ölführungskanalteil (1) nach einem der vorstehenden Ansprüche, **dadurch gekennzeichnet, dass** ein dritter Ablauf (19) in der vorbestimmten Einbaurichtung oberhalb des ersten Beckenbodens (26) an einer dem ersten Ablauf (15) gegenüberliegenden Seite von der ersten Beckenwand (25) des ersten Sammelbeckens (13) abragt.

9. Ölführungskanalteil (1) nach einem der vorstehenden Ansprüche, **dadurch gekennzeichnet, dass** das Ölführungskanalteil (1) mehrere von dem Ölführungskanalteil (1) abstehende Haltenocken (23) vorzugsweise an gegenüberliegenden Seiten des Ölführungskanalteils (1) aufweist, über die das Ölführungskanalteil (1) in dem vorbestimmten Einbauzustand in dem Getriebe (100) montierbar ist.

10. Ölführungskanalteil (1) nach einem der vorstehenden Ansprüche, **dadurch gekennzeichnet, dass** das Ölführungskanalteil (1) als Einlegeteil ausgebildet ist.

## Claims

1. Oil duct part (1) for installation in a gearbox (100), in particular for installation in a motor vehicle gearbox, wherein the oil duct part (1) has a duct (2) with a receiving opening (11) and an outlet opening (12), wherein the duct (2) from the receiving opening (11) to the outlet opening (12) has an oil guiding direction (F) and a duct wall (21) which is circumferentially closed perpendicularly to the oil guiding direction (F), wherein the oil duct part (1) furthermore has at least one oil collection region (13a) for the accumulation of oil directed through the duct (2), wherein the oil duct part (1) has at least one drain (15a) for oil from the at least one oil collection region (13a), wherein the at least one oil collection region (13a) comprises a first collection reservoir (13), wherein the first collection reservoir (13) has a first reservoir wall (25) and a first reservoir base (24), wherein the duct (2) is contiguous to the first reservoir wall (25) of the first collection reservoir (13) in such a manner that, when viewed in the oil guiding direction (F) of the duct (2), the first reservoir base (24) is disposed between the receiving opening (11) and the outlet opening (12), **characterized in that** the duct (2) is designed to be rectilinear from the receiving opening (11) to the outlet opening (12).

2. Oil duct part (1) according to Claim 1, **characterized in that** the oil duct part (1) is designed to be installed in a gearbox (100) in a predetermined installation state which defines an orientation of the oil duct part (1) relative to gravity (G), wherein in an orientation which corresponds to the predetermined installation state, the first reservoir base (24) is aligned approximately perpendicularly to gravity (G), and the oil guiding direction (F) from the receiving opening (11) and up to the outlet opening (12) runs counter to gravity (G).

3. Oil duct part (1) according to Claim 1 or 2, **characterized in that** an end of the duct wall (21) of the duct (2) facing away from the receiving opening (11) forms an encircling wall (21a) projecting beyond the first reservoir base (24) of the first collection reservoir (13) and delimiting the outlet opening (12).

4. Oil duct part (1) according to one of the preceding claims, **characterized in that** the oil collection region (13a) of the oil duct part (1) comprises a second collection reservoir (14), wherein the second collection reservoir (14) has a second reservoir wall (27) and a second reservoir base (26), wherein the second collection reservoir (14) is connected to the first collection reservoir (13) by way of a connecting duct (29).

5. Oil duct part (1) according to Claims 3 and 4, **characterized in that** the periphery of the encircling wall (21a) on a side facing the first collection reservoir (13) has a spacing from the first reservoir base (24) that is less than the spacing of the periphery of the encircling wall (21a) from the second reservoir base (26) on a side facing the second collection reservoir (14).

6. Oil duct part according to one of the preceding claims, **characterized in that** a first drain (15), in the predetermined installation direction above the first reservoir base (24), protrudes from the first reservoir wall (25).

7. Oil duct part according to Claim 4, **characterized in that** a second drain (16), in the predetermined installation direction above the second reservoir base (26), protrudes from the second reservoir wall (27) of the second collection reservoir (14).

8. Oil duct part (1) according to any one of the preceding claims, **characterized in that** a third drain (19) in the predetermined installation direction above the first reservoir base (26), on a side opposite the first drain (15), protrudes from the first reservoir wall (25) of the first collection reservoir (13).

9. Oil duct part (1) according to one of the preceding claims, **characterized in that** the oil duct part (1), preferably on mutually opposite sides of the oil duct part (1), has a plurality of retaining cams (23) which protrude from the oil duct part (1) and by way of which the oil duct part (1) is able to be assembled in the predetermined installation state in the gearbox (100).

10. Oil duct part (1) according to one of the preceding claims, **characterized in that** the oil duct part (1) is designed as an insert part.

## Revendications

1. Pièce de conduit d'huile (1) à installer dans une transmission (100), en particulier à installer dans une transmission de véhicule à moteur, la pièce de conduit d'huile (1) présentant une conduite (2) ayant un orifice d'entrée (11) et un orifice de sortie (12), la conduite (2) présentant une direction d'acheminement d'huile (F) de l'orifice d'entrée (11) jusqu'à l'orifice de sortie (12) et une paroi de conduite (21) fermée circonférentiellement perpendiculairement à la direction d'acheminement d'huile (F), la pièce de conduit d'huile (1) présentant en outre au moins une région de collecte d'huile (13a) pour collecter de l'huile acheminée par la conduite (2), la pièce de conduit d'huile (1) présentant au moins une ouverture d'évacuation (15a) pour l'huile provenant de ladite au moins une région de collecte d'huile (13a), dans laquelle ladite au moins une région de collecte d'huile (13a) comprend un premier réservoir (13), dans laquelle le premier réservoir (13) présente une première paroi de réservoir (25) et une première base de réservoir (24), la conduite (2) étant adjacente à la première paroi de réservoir (25) du premier réservoir (13) de sorte que, vue dans la direction d'acheminement d'huile (F) de la conduite (2), la première base de réservoir (24) est située entre l'orifice d'entrée (11) et l'orifice de sortie (12), **caractérisée en ce que** la conduite (2) est de forme rectiligne de l'orifice d'entrée (11) jusqu'à l'orifice de sortie (12).

2. Pièce de conduit d'huile (1) selon la revendication 1, **caractérisée en ce que** la pièce de conduit d'huile (1) est conçue pour être installée dans une transmission (100) dans un état d'installation prédéterminé, qui définit une orientation de la pièce de conduit d'huile (1) par rapport à la pesanteur (G), dans laquelle, dans une orientation correspondant à l'état d'installation prédéterminé, la première base de réservoir (24) est orientée approximativement perpendiculairement à la pesanteur (G) et la direction d'acheminement d'huile (F) s'étend à partir de l'orifice d'entrée (11) et jusqu'à l'orifice de sortie (12) à l'opposé de la pesanteur (G).

3. Pièce de conduit d'huile (1) selon la revendication 1 ou 2, **caractérisée en ce qu'**une extrémité de la paroi de conduite (21) de la conduite (2) qui est tournée à l'opposé de l'orifice d'entrée (11) forme une paroi circonférentielle (21a) faisant saillie au-delà de la première base de réservoir (24) du premier réservoir (13) et délimitant l'orifice de sortie (12).

4. Pièce de conduit d'huile (1) selon l'une des revendications précédentes, **caractérisée en ce que** la région de collecte d'huile (13a) de la pièce de conduit d'huile (1) comprend un deuxième réservoir (14), dans laquelle le deuxième réservoir (14) présente une deuxième paroi de réservoir (27) et une deuxième base de réservoir (26), dans laquelle le deuxième réservoir (14) est en liaison avec le premier réservoir (13) par le biais d'un conduit de liaison (29).

5. Pièce de conduit d'huile (1) selon les revendications 3 et 4, **caractérisée en ce que** le bord de la paroi circonférentielle (21a) présente, sur un côté tourné vers le premier réservoir (13), une distance à la première base de réservoir (24), laquelle est inférieure à la distance du bord de la paroi circonférentielle (21a) à la deuxième base de réservoir (26) sur un côté tourné vers le deuxième réservoir (14).

6. Pièce de conduit d'huile selon l'une des revendications précédentes, **caractérisée en ce qu'**une première ouverture d'évacuation (15) fait saillie à partir de la première paroi de réservoir (25) dans la direction d'installation prédéterminée au-dessus de la première base de réservoir (24).

7. Pièce de conduit d'huile selon la revendication 4, **caractérisée en ce qu'**une deuxième ouverture d'évacuation (16) fait saillie à partir de la deuxième paroi de réservoir (27) du deuxième réservoir (14) dans la direction d'installation prédéterminée au-dessus de la deuxième base de réservoir (26).

8. Pièce de conduit d'huile (1) selon l'une des revendications précédentes, **caractérisée en ce qu'**une troisième ouverture d'évacuation (19) fait saillie à partir de la première paroi de réservoir (25) du premier réservoir (13) dans la direction d'installation prédéterminée au-dessus de la première base de réservoir (26) sur un côté opposé à la première ouverture d'évacuation (15).

9. Pièce de conduit d'huile (1) selon l'une des revendications précédentes, **caractérisée en ce que** la pièce de conduit d'huile (1) présente plusieurs cames de retenue (23) faisant saillie à partir de la pièce de conduit d'huile (1) de préférence sur des côtés opposés de la pièce de conduit d'huile (1), cames par le biais desquelles la pièce de conduit d'huile (1) peut être montée dans l'état d'installation prédéterminé dans la transmission (100).

10. Pièce de conduit d'huile (1) selon l'une des revendications précédentes, **caractérisée en ce que** la pièce de conduit d'huile (1) est conçue sous la forme d'une pièce à insérer.
